# EUROPÄISCHE PATENTSCHRIFT

(11) **EP 0 615 980 B1**
(45) Veröffentlichungstag und Bekanntmachung des Hinweises auf die Patenterteilung: **05.12.2001**
(21) Anmeldenummer: 94810148.0
(22) Anmeldetag: 09.03.1994
(51) Int. Cl.: C08F 2/50, C08F 299/04

(54) **Härtung von Bisacylphosphinoxid-Photoinitiatoren enthaltenden Zusammensetzungen**
Curing of compositions containing Bisacylphosphinoxide
Durcissement de compositions contenant des initiateurs Bisacylphosphinoxide

(30) Priorität: 18.03.1993 CH 81693
(43) Veröffentlichungstag der Anmeldung: 21.09.1994
(73) Patentinhaber: Ciba Specialty Chemicals Holding Inc., 4057 Basel (CH)
(72) Erfinder: Leppard, David G., Dr., CH-1723 Marly (CH); Köhler, Manfred, Dr., D-79108 Freiburg (DE); Misev, Ljubomir, Dr., CH-4123 Allschwil (CH)

(56) Entgegenhaltungen:
- EP-A- 0 184 095
- EP-A- 0 446 175
- GB-A- 2 259 704
- RESEARCH DISCLOSURE 35077, Juni 1993 'Novel applications for acylphosphine-oxides'

## Beschreibung

Die Erfindung betrifft ein Verfahren zur Härtung von ethylenisch ungesättigten polymerisierbaren Verbindungen mit Tageslicht bzw. tageslichtäquivalenten Lichtquellen, sowie Zusammensetzungen, welche mit Tageslicht bzw. tageslichtäquivalenten Lichtquellen härtbar sind, und deren Verwendung zum Beschichten von Oberflächen.

Mono- und Bisacylphosphinoxide sind als Photoinitiatoren bekannt. In den US Patenten 4,792,632 und 4,737,593 sind Bisacylphosphinoxide beschrieben, die als Photohärter für Dentalmassen verwendet werden.
Weitere Mono- und Bisacylphosphinoxid-Photoinitiatoren sind im US 5,218,009 veröffentlicht. Alkyl-Bisacylphosphinoxide sind aus der GB-A-2 259 704 bekannt.
Am Tageslicht härtende Formulierungen sind der EP-A-160 723 zu entnehmen. Die dort beschriebenen Formulierungen enthalten als Photohärter Monoacylphosphinoxide oder flüssige Kombinationen dieser Verbindungen mit einer α-Hydroxyacetophenonverbindung, einem Benzildialkylketal und/oder Methylthioxanthon.

In der EP-A-446 175 sind Photoinitiatorzwischungen aus Mono- oder Bisacylphosphinoxiden, α-Hydroxyketonen und Benzophenon (derivaten) beschrieben.

Für den umfangreichen Anwendungsbereich von Photoinitiatoren gibt es eine Vielzahl an unterschiedlichen, wirksamen Verbindungen, welche insbesondere zur Härtung durch Bestrahlen mit UV-Licht emittierenden Lampen hoher Intensität geeignet sind. Es besteht jedoch auch ein Bedarf polymerisierbare Zusammensetzungen mit Hilfe von Tageslicht bzw. tageslichtäquivalenten Lichtquellen, deren Intensität pro bestrahlter Fläche geringer als bei den erwähnten UV-Lampen ist, ausreichend zu härten.

Es wurde nun überraschend gefunden, dass bei der Verwendung von bestimmten Bisacylphosphinoxid-Photoinitiatoren die Härtung von polymerisierbaren Zusammensetzungen mit Tageslicht bzw. tageslichtäquivalenten Lichtquellen besonders gut erfolgt.

Gegenstand der Erfindung ist daher ein Verfahren zur Härtung von ethylenisch ungesättigten polymerisierbaren Verbindungen dadurch gekennzeichnet, dass man diesen als Photoinitiatoren ausschließlich Verbindungen der Formel I 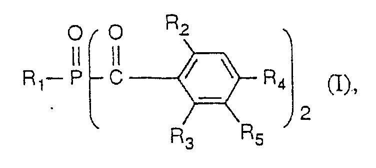 zusetzt, worin
R₁ Phenyl, bedeutet,
R₂ und R₃ unabhängig voneinander für C₁-C₁₂-Alkyl stehen,
R₄ Wasserstoff oder C₁-C₁₂-Alkyl darstellt und
R₅ Wasserstoff oder Methyl bedeutet,
und mit Tageslicht bzw. tageslichtäquivalenten Lichtquellen bestrahlt, wobei die Strahlungsintensitäten im Bereich von 10 - 30 mW/cm² liegen und die Wellenlänge der Strahlung 300 - 500 nm beträgt.

R₂, R₃ und R₄ als C₁-C₁₂-Alkyl sind beispielsweise Methyl, Ethyl, n-Propyl, iso-Propyl, n-Butyl, 1-Methyl-prop-1-yl, 2-Methyl-prop-1-yl, tert-Butyl, Pentyl, Hexyl, Heptyl, Octyl, 2,4,4-Trimethyl-pent-1-yl, 2-Ethylhexyl, Nonyl, Decyl oder Dodecyl, insbesondere C₁-C₄-Alkyl, vorzugsweise Methyl.

R₅ ist vorzugsweise Wasserstoff.

Bevorzugt ist ein Verfahren, worin in den Verbindungen der Formel I R₂ und R₃ C₁-C₄-Alkyl bedeuten und R₄ Wasserstoff oder C₁-C₄-Alkyl ist.

Insbesondere bevorzugt ist ein Verfahren, worin in den Verbindungen der Formel I R₂ und R₃ Methyl bedeuten und R₄ Wasserstoff oder Methyl ist.

Interessant ist ein Verfahren, worin in den Verbindungen der Formel I R₂, R₃ und R₄ Methyl bedeuten.

Bevorzugt ist auch ein Verfahren, worin in den Verbindungen der Formel I R₂, R₃ und R₄ Methyl bedeuten und R₅ Wasserstoff ist.

Die Verbindungen der Formel I können z.B. hergestellt werden durch doppelte Acylierung eines primären Phosphins III mit mindestens 2 Aequivalenten eines Säurechlorides II in Gegenwart von mindestens 2 Aequivalenten einer Base und anschliessende Oxydation des erhaltenen Diacylphosphins IV zum Phosphinoxid nach dem Schema:

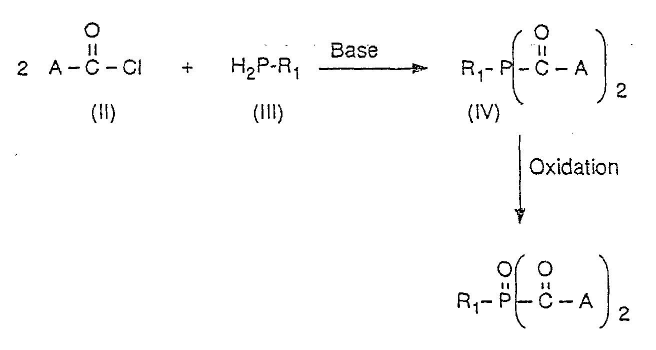

A steht für einen Rest 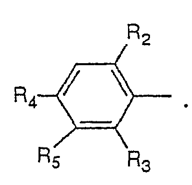 R₁, R₂, R₃, R₄ und R₅ haben die oben angegebene Bedeutung.

Als Base eignen sich z.B. tertiäre Amine, Alkalimetalle, Lithiumdiisopropylamid, Alkalialkoholate oder Alkalihydride. Die erste Reaktionsstufe geschieht vorzugsweise in einem Lösungsmittel. Als Lösemittel sind vor allem Kohlenwasserstoffe, wie z.B. Alkane, Benzol, Toluol, Xylol oder Ether, wie z.B. Dibutylether oder Tetrahydrofuran (THF), geeignet. Nach Abtrennen des gebildeten Basenchlorides kann das Phosphin (IV) durch Eindampfen isoliert werden oder man führt die zweite Reaktionsstufe ohne Isolierung von (IV) mit der Lösung des Rohproduktes durch. Als Oxidationsmittel für die zweite Stufe eignen sich vor allem Wasserstoffperoxid und organische Peroxyverbindungen, beispielsweise Peressigsäure oder Luft.

Die als Ausgangsmaterial benutzten primären Phosphine (III) sind bekannte, zum Teil kommerziell erhältliche Verbindungen oder können in Analogie zu bekannten Verbindungen hergestellt werden (siehe dazu Houben-Weyl, Methoden der Org. Chemie XII/1, 60-63 (1963), G. Thieme-Verlag, Stuttgart). Auch die Herstellung der Säurechloride der Formel (II) erfolgt nach bekannten Methoden aus dem Stand der Technik.

Beispiele für Photoinitiatoren der Formel I zur Verwendung in den tageslichthärtbaren Zusammensetzungen sind:
Bis(2,4,6-trimethylbenzoyl)-phenyl-phosphinoxid
Bis(2,6-dimethylbenzoyl)-phenyl-phosphinoxid
Bis(2,4,6-triethylbenzoyl)-phenyl-phosphinoxid
Bis(2,6-diethylbenzoyl)-phenyl-phosphinoxid
Bis(2,4,6-triisopropylbenzoyl)-phenyl-phosphinoxid
Bis(2,6-dimethyl-4-n-butyl-benzoyl)-phenyl-phosphinoxid

Die ethylenisch ungesättigten polymerisierbaren Verbindungen können eine oder mehrere olefinische Doppelbindungen enthalten. Sie können niedermolekular (monomer) oder höhermolekular (oligomer) sein.

Beispiele für Monomere mit einer Doppelbindung sind Alkyl- oder Hydroxyalkyl-acrylate oder -methacrylate, wie z.B. Methyl-, Ethyl-, Butyl-, 2-Ethylhexyl- oder 2-Hydroxyethylacrylat, Isobornylacrylat, Methyl- oder Ethylmethacrylat. Interessant sind auch Silicon-acrylate. Weitere Beispiele sind Acrylnitril, Acrylamid, Methacrylamid, N-substituierte (Meth)acrylamide, Vinylester wie Vinylacetat, Vinylether wie Isobutylvinylether, Styrol, Alkyl- und Halogenstyrole, N-Vinylpyrrolidon, Vinylchlorid oder Vinylidenchlorid.
Beispiele für Monomere mit mehreren Doppelbindungen sind Ethylenglykol-, Propylenglykol-, Neopentylglykol-, Hexamethylenglykol- oder Bisphenol-A-diacrylat, 4,4'-Bis(2-acryloyloxyethoxy)-diphenylpropan, Trimethylolpropan-triacrylat, Pentaerythrit-triacrylat oder -tetraacrylat, Vinylacrylat, Divinylbenzol, Divinylsuccinat, Diallylphthalat, Triallylphosphat, Triallylisocyanurat oder Tris-(2-acryloylethyl)isocyanurat.

Beispiele für höhermolekulare (oligomere) mehrfach ungesättigte Verbindungen sind acrylierte Epoxidharze, acrylierte Polyether, acrylierte Polyurethane, acrylierte oder Vinylether- oder Epoxy-terminierte Polyester. Weitere Beispiele für ungesättigte Oligomere sind ungesättigte Polyesterharze, die meist aus Maleinsäure, Fumarsäure, Phthalsäure und einem oder mehreren Diolen hergestellt werden und Molekulargewichte von etwa 500 bis 3000 besitzen. Solche ungesättigte Oligomere kann man auch als Prepolymere bezeichnen.

Geeignet sind z.B. Ester von ethylenisch ungesättigten Carbonsäuren und Polyolen oder Polyepoxiden, und Polymere mit ethylenisch ungesättigten Gruppen in der Kette oder in Seitengruppen, wie z. B. ungesättigte Polyester, Polyamide und Polyurethane und Copolymere hiervon, Polybutadien und Butadien. Copolymere, Polyisopren und Isopren-Copolymere, Polymere und Coplymere mit (Meth)Acrylgruppen in Seitenketten, sowie Mischungen von einem oder mehreren solcher Polymerer.

Beispiele für ungesättigte Carbonsäuren sind Acrylsäure, Methacrylsäure, Crotonsäure, Itaconsäure, Zimtsäure, ungesättigte Fettsäuren wie Linolensäure oder Oelsäure. Bevorzugt sind Acryl- und Methacrylsäure.

Als Polyole sind aromatische und besonders aliphatische und cycloaliphatische Polyole geeignet. Beispiele für aromatische Polyole sind Hydrochinon, 4,4'-Dihydroxydiphenyl, 2,2-Di(4-hydroxyphenyl)-propan, sowie Novolake und Resole. Beispiele für Polyepoxide sind solche auf der Basis der genannten Polyole, besonders der aromatischen Polyole und Epichlorhydrin. Ferner sind auch Polymere und Copolymere, die Hydroxylgruppen in der Polymerkette oder in Seitengruppen enthalten, wie z.B. Polyvinylalkohol und Copolymere davon oder Polymethacrylsäurehydroxyalkylester oder Copolymere davon, als Polyole geeignet. Weitere geeignete Polyole sind Oligoester mit Hydroxylendgruppen.

Beispiele für aliphatische und cycloaliphatische Polyole sind Alkylendiole mit bevorzugt 2 bis 12 C-Atomen, wie Ethylenglykol, 1,2- oder 1,3-Propandiol, 1,2-, 1,3- oder 1,4-Butandiol, Pentandiol, Hexandiol, Octandiol, Dodecandiol, Triethylenglykol, Polyethylenglykole mit Molekulargewichten von bevorzugt 200 bis 1500, 1,3-Cyclopentandiol, 1,2-, 1,3- oder 1,4-Cyclohexandiol, 1,4-Dihydroxymethylcyclohexan, Glycerin, Tris-(β-hydroxyethyl)amin, Trimethylolethan, Trimethylolpropan, Pentaerythrit, Dipentaerythrit und Sorbit.

Die Polyole können teilweise oder vollständig mit einer oder verschiedenen ungesättigten Carbonsäuren verestert sein, wobei in Teilestern die freien Hydroxylgruppen modifiziert, z.B. verethert oder mit anderen Carbonsäuren verestert sein können.

### Beispiele für Ester sind:

Trimethylolpropantriacrylat, Trimethylolethantriacrylat, Trimethylolpropantrimethacrylat, Trimethylolethantrimethacrylat, Tetramethylenglykoldimethacrylat, Triethylenglykoldimethacrylat, Tetraethylenglykoldiacrylat, Pentaerythritdiacrylat, Pentaerythrittriacrylat, Pentaerythrittetraacrylat, Dipentaerythritdiacrylat, Dipentaerythrittriacrylat, Dipentaerythrittetraacrylat, Dipentaerythritpentaacrylat, Dipentaerythrithexaacrylat, Tripentaerythritoctaacrylat, Pentaerythritdimethacrylat, Pentaerythrittrimethacrylat, Dipentaerythritdimethacrylat, Dipentaerythrittetramethacrylat, Tripentaerythritoctamethacrylat, Pentaerythritdiitaconat, Dipentaerythrittrisitaconat, Dipentaerythritpentaitaconat, Dipentaerythrithexaitaconat, Ethylenglykoldiacrylat, 1,3-Butandioldiacrylat, 1,3-Butandioldimethacrylat, 1,4-Butandioldiitaconat, Sorbittriacrylat, Sorbittetraacrylat, Pentaerythrit-modifiziert-triacrylat, Sorbittetramethacrylat, Sorbitpentaacrylat, Sorbithexaacrylat, Oligoesteracrylate und -methacrylate, Glycerindi- und -triacrylat, 1,4-Cyclohexandiacrylat, Bisacrylate und Bismethacrylate von Polyethylenglykol mit Molekulargewicht von 200 bis 1500, oder Gemische davon.

Als ethylenisch ungesättigte polymerisierbare Verbindungen sind auch die Amide gleicher oder verschiedener ungesättigter Carbonsäuren von aromatischen, cycloaliphatischen und aliphatischen Polyaminen mit bevorzugt 2 bis 6, besonders 2 bis 4 Aminogruppen geeignet. Beispiele für solche Polyamine sind Ethylendiamin, 1,2- oder 1,3-Propylendiamin, 1,2-, 1,3- oder 1,4-Butylendiarnin, 1,5-Pentylendiamin, 1,6-Hexylendiamin, Octylendiamin, Dodecylendiamin, 1,4-Diaminocyclohexan, Isophorondiamin, Phenylendiamin, Bisphenylendiamin, Di-βaminoethylether, Diethylentriamin, Triethylentetramin, Di-(β-aminoethoxy)- oder Di-(β-aminopropoxy)ethan. Weitere geeignete Polyamine sind Polymere und Copolymere mit gegebenenfalls zusätzlichen Aminogruppen in der Seitenkette und Oligoamide mit Aminoendgruppen. Beispiele für solche ungesättigten Amide sind: Methylen-bis-acrylamid, 1,6-Hexamethylen-bis-acrylamid, Diethylentriamin-tris-methacrylamid, Bis(methacrylamidopropoxy)-ethan, β-Methacrylamidoethylmethacrylat, N[(β-Hydroxyethoxy)ethyl]-acrylamid.

Geeignete ungesättigte Polyester und Polyamide leiten sich z.B. von Maleinsäure und Diolen oder Diaminen ab. Die Maleinsäure kann teilweise durch andere Dicarbonsäuren, wie z.B. Fumarsäure, Itaconsäure, Citraconsäure, Mesaconsäure oder Chlormaleinsäure, ersetzt sein. Zur Steuerung der Reaktivität des Polyesters, sowie zur Beeinflussung der Vernetzungsdichte und somit der Produkteeigenschaften, können neben den ungesättigten Dicarbonsäuren auch unterschiedliche Anteile an gesättigten Dicarbonsäuren, wie z.B. Phthalsäure, Isophthalsäure, Terephthalsäure, Tetrahydrophthalsäure, Bernsteinsäure oder Adipinsäure, eingesetzt werden. Die ungesättigten Polyester können zusammen mit ethylenisch ungesättigten Comonomeren, z.B. Styrol, eingesetzt werden. Die Polyester und Polyamide können sich auch von Dicarbonsäuren und ethylenisch ungesättigten Diolen oder Diaminen ableiten, besonders von längerkettigen mit z.B. 6 bis 20 C-Atomen. Beispiele für Polyurethane sind solche, die aus gesättigten oder ungesättigten Diisocyanaten und ungesättigten bzw. gesättigten Diolen aufgebaut sind.

Geeignete Polyesteracrylate oder acrylierte Polyester werden durch Reaktion von Oligomeren, wie z.B. Epoxiden, Urethanen, Polyethern oder Polyestem, mit Acrylaten, wie beispielsweise Hydroxyethylacrylat oder Hydroxypropylacrylat, erhalten.

Polybutadien und Polyisopren und Copolymere davon sind bekannt. Geeignete Comonomere sind z.B. Olefine wie Ethylen, Propen, Buten, Hexen, (Meth)-Acrylate, Acrylnitril, Styrol oder Vinylchlorid. Polymere mit (Meth)-Acrylatgruppen in der Seitenkette sind ebenfalls bekannt. Es kann sich z.B. um Umsetzungsprodukte von Epoxidharzen auf Novolakbasis mit (Meth)-Acrylsäure handeln, um Homo- oder Copolymere des Vinylalkohols oder deren Hydroxyalkylderivaten, die mit (Meth)-Acrylsäure verestert sind, oder um Homo- und Copolymere von (Meth)-Acrylaten, die mit Hydroxyalkyl(meth)acrylaten verestert sind.

Bevorzugte Monomere sind z.B. Alkyl-oder Hydroxyalkyl-acrylate oder -methacrylate, Styrol, Ethylenglykol-, Propylenglykol-, Neopentylglykol-, Hexamethylenglykol- oder Bisphenol-A-diacrylat, 4,4'-Bis(2-acryloyloxyethoxy)-diphenylpropan, Trimethylolpropan-triacrylat, Pentaerythrit-triacrylat oder -tetraacrylat, insbesondere Acrylate, Styrol, Hexamethylenglykol- oder Bisphenol-A-diacrylat, 4,4'-Bis(2-acryloyloxyethoxy)-diphenylpropan oder Trimethylolpropan-triacrylat.

Besonders bevorzugte (oligomere) mehrfach ungesättigte Verbindungen sind Polyesteracrylate oder ungesättigte Polyesterharze, die aus Maleinsäure, Fumarsäure, Phthalsäure und einem oder mehreren Diolen hergestellt werden und Molekulargewichte von etwa 500 bis 3000 besitzen.

Bevorzugte ungesättigte Carbonsäuren sind Acryl- und Methacrylsäure.

Die photopolymerisierbaren Verbindungen können alleine oder in beliebigen Mischungen eingesetzt werden. Bevorzugt werden Gemische von Polyol(Meth)Acrylaten verwendet.

Den ethylenisch ungesättigten photopolymerisierbaren Verbindungen können auch Bindemittel zugesetzt werden, was besonders zweckmässig ist, wenn es sich bei den photopolymerisierbaren Verbindungen um flüssige oder viskose Substanzen handelt. Die Menge des Bindemittels kann z.B. 5-95, vorzugsweise 10-90 und besonders 40-90 Gew.-% betragen, bezogen auf den Gesamtfestkörper. Die Wahl des Bindemittels erfolgt je nach dem Anwendungsgebiet und hierfür geforderter Eigenschaften wie Entwickelbarkeit in wässrigen und organischen Lösungsmittelsystemen, Adhäsion auf Substraten und Sauerstoffempfindlichkeit.

Geeignete Bindemittel sind z.B. Polymere mit einem Molekulargewicht von etwa 5000-2 000 000, bevorzugt 10 000-1 000 000. Beispiele sind: Homo- und Copolymere Acrylate und Methacrylate, z.B. Copolymere aus Methylmethacrylat/Ethylacrylat/Methacrylsäure, Poly(methacrylsäurealkylester), Poly(acrylsäurealkylester); Celluloseester und -ether wie Celluloseacetat, Celluloseacetatbutyrat, Methylcellulose, Ethylcellulose; Polyvinylbutyral, Polyvinylformal, cyclisierter Kautschuk, Polyether wie Polyethylenoxid, Polypropylenoxid, Polytetrahydrofuran; Polystyrol, Polycarbonat, Polyurethan, chlorierte Polyolefine, Polyvinylchlorid, Copolymere aus Vinylchlorid/Vinylidenchlorid, Copolymere von Vinylidenchlorid mit Acrylnitril, Methylmethacrylat und Vinylacetat, Polyvinylacetat, Copoly(ethylen/vinylacetat), Polymere wie Polycaprolactam und Poly(hexamethylenadipamid), Polyester wie Poly(ethylenglykolterephtalat) und Poly(hexamethylenglykolsuccinat).

Die ungesättigten Verbindungen können auch im Gemisch mit nicht-photopolymerisierbaren filmbildenden Komponenten verwendet werden. Diese können z.B. physikalisch trocknende Polymere bzw. deren Lösungen in organischen Lösemitteln sein, wie z.B. Nitrocellulose oder Celluloseacetobutyrat.

In Lacken verwendet man häufig Gemische eines Prepolymeren mit mehrfach ungesättigten Monomeren, die ausserdem noch ein einfach ungesättigtes Monomer enthalten. Das Prepolymere ist hierbei in erster Linie für die Eigenschaften des Lackfilmes massgebend, durch seine Variation kann der Fachmann die Eigenschaften des gehärteten Filmes beeinflussen. Das mehrfach ungesättigte Monomere fungiert als Vernetzer, das den Lackfilm unlöslich macht. Das einfach ungesättigte Monomere fungiert als reaktiver Verdünner, mit dessen Hilfe die Viskosität herabgesetzt wird, ohne dass man ein Lösungsmittel verwendet muss. Von der wahl des Monomers hängen ausserdem Eigenschaften wie Härtungsgeschwindigkeit, Vernetzungsdichte und Oberflächeneigenschaften der gehärteten Zusammensetzung ab.

Ungesättigte Polyesterharze werden meist in Zweikomponentensystemen zusammen mit einem einfach ungesättigten Monomer, vorzugsweise mit Styrol, verwendet.

Bevorzugt ist ein Verfahren, worin die ethylenisch ungesättigten polymerisierbaren Verbindungen eine Mischung aus (i) mindestens einer oligomeren Verbindung und (ii) mindestens einem Monomer sind.

Interessant ist ein Verfahren, worin die ethylenisch ungesättigten polymerisierbaren Verbindungen eine Mischung aus (i) ungesättigten Polyestern, insbesondere solchen, die aus Maleinsäure, Fumarsäure und/oder Phthalsäure und einem oder mehreren Diolen hergestellt werden, und Molekulargewichte von 500-3000 besitzen, und (ii) Acrylaten, Methacrylaten oder/und Styrol sind.

Wichtig ist auch ein Verfahren, worin die ethylenisch ungesättigten polymerisierbaren Verbindungen eine Mischung aus (i) ungesättigten Polyestern und (ii) Acrylaten und/oder Methacrylaten sind.

Weiterhin interessant ist ein Verfahren, worin die ethylenisch ungesättigten polymerisierbaren Verbindungen eine Mischung aus (i) Polyesteracrylaten und (ii) Acrylaten und/oder Methacrylaten sind.

Die Verbindungen der Formel I werden als Photoinitiatoren zur Härtung von ethylenisch ungesättigten polymerisierbaren Verbindungen mit Tageslicht bzw. tageslichtäquivalenten Lichtquellen verwendet.

Gegenstand der Erfindung ist daher auch die Verwendung von ausschließlich Verbindungen der Formel I als Photoinitiatoren zur Hartung von ethylenisch ungesättigten polymerisierbaren Verbindungen mit Tageslicht bzw. tageslichtäquivalenten Lichtquellen, wobei die Strahlungsintensitäten im Bereich von 10 - 30 mW/cm² liegen und die Wellenlänge der Strahlung 300 - 500 nm beträgt.

Die photopolymerisierbaren Gemische können ausser dem Photoinitiator verschiedene Additive enthalten. Zur Erhöhung der Dunkellagerstabilität können z.B. Kupferverbindungen, wie Kupfernaphthenat, -stearat oder -octat, Phosphorverbindungen, wie z.B. Triphenylphosphin, Tributylphosphin, Triethylphosphit, Triphenylphosphit oder Tribenzylphosphit, quartäre Ammoniumverbindungen, wie z.B. Tetramethylammoniumchlorid oder Trimethyl-benzylammoniumchlorid, oder Hydroxylaminderivate, wie z.B. N-Diethylhydroxylamin verwendet werden. Zwecks Ausschluss des Luftsauerstoffes während der Polymerisation kann man Paraffin oder ähnliche wachsartige Stoffe zusetzen, die bei Beginn der Polymerisation wegen mangelnder Löslichkeit im Polymeren an die Oberfläche wandern und eine transparente Oberflächenschicht bilden, die den zutritt von Luft verhindert. Als Lichtschutzmittel können in geringer Menge Lichtschutzmitteln, die UV-Licht nicht absorbieren, wie z.B. von sterisch gehinderten Aminen (HALS), zugesetzt werden.

Zur Beschleunigung der Photopolymerisation können Amine zugesetzt werden, wie z.B. Triethanolamin, N-Methyl-diethanolamin, p-Dimethylaminobenzoesäure-ethylester oder Michlers Keton. Die Wirkung der Amine kann verstärkt werden durch den Zusatz von aromatischen Ketonen vom Typ des Benzophenons. Als Sauerstofffänger brauchbare Amine sind beispielsweise substituierte N,N-dialkylaniline, wie sie in der EP-A- 339 841 beschrieben sind.
Eine Beschleunigung der Photopolymerisation kann weiterhin durch Zusatz von Photosensibilisatoren geschehen. Dies sind insbesondere aromatische Carbonylverbindungen wie z.B. Thioxanthon-, Anthrachinon- und 3-Acylcumarinderivate sowie 3-(Aroylmethylen)-thiazoline, aber auch Eosin-, Rhodanin- und Erythrosin-Farbstoffe. Die erfindungsgemässen Zusammensetzungen können auch einen photoreduzierbaren Farbstoff, wie z.B. Xanthen-, Benzoxanthen, Benzothioxanthen, Thiazin-, Pyronin, Porphyrin- oder Acridinfarbstoffe, und/oder eine durch Strahlung spaltbare Trihalogenmethylverbindung enthalten. Achnliche Zusammensetzungen sind beispielsweise in der EP-A-445 624 beschrieben.
Unterstützt werden kann der Härtungsvorgang insbesondere von, z.B. mit TiO₂, pigmentierten Zusammensetzungen, auch durch Zugabe einer unter thermischen Bedingungen radikalbildenden Komponente wie z.B. einer Azoverbindung wie etwa 2,2'-Azobis(4-methoxy-2,4-dimethylvaleronitril) oder einer Peroxyverbindung wie etwa Hydroperoxid oder Peroxycarbonat, z.B. t-Butylhydroperoxid, wie z.B. in der EP-A 245 639 beschrieben.

Weitere übliche Zusätze sind - je nach Verwendungszweck - optische Aufheller, Füllstoffe, Pigmente, Farbstoffe, Netzmittel oder Verlaufhilfsmittel.

Gegenstand der Erfindung ist auch ein Verfahren, worin die ethylenisch ungesättigten polymerisierbaren Verbindungen in Wasser gelöst oder emulgiert sind.

Solche strahlungshärtbaren wässrigen Prepolymerdispersionen sind in vielen Variationen im Handel erhältlich. Man versteht darunter eine Dispersion aus Wasser und mindestens einem darin dispergierten Prepolymeren. Die Konzentration des Wassers in diesen Systemen liegt z.B. bei 5 bis 80, insbesondere 30 bis 60 Gew.-%. Das strahlungshärtbare Prepolymere bzw. Prepolymerengemisch ist beispielsweise in Konzentrationen von 95 bis 20, insbesondere 70 bis 40 Gew.-% enthalten. In diesen Zusammensetzungen ist die Summe der für Wasser und Prepolymere genannten Prozentzahlen jeweils 100, die Hilfs- und Zusatzstoffe kommen, je nach Verwendungszweck in unterschiedlichen Mengen hinzu.

Bei den strahlungshärtbaren, in Wasser dispergierten, oft auch gelösten filmbildenden Prepolymeren handelt es sich z.B. um für wässrige Prepolymerdispersionen an sich bekannte, durch freie Radikale initiierbare mono- oder polyfunktionelle ethylenisch ungesättigte Prepolymere, die beispielsweise einen Gehalt von 0,01 bis 1,0 Mol pro 100 g Prepolymer an polymerisierbaren Doppelbindungen, sowie ein mittleres Molekulargewicht von z.B. mindestens 400, insbesondere von 500 bis 10000 aufweisen.
Je nach Anwendungszweck kommen jedoch auch Prepolymere mit höheren Molekulargewichten in Frage.
Es werden beispielsweise polymerisierbare C-C-Doppelbindungen enthaltende Polyester mit einer Säurezahl von höchstens 10, polymerisierbare C-C-Doppelbindungen enthaltende Polyether, hydroxylgruppenhaltige Umsetzungsprodukte aus einem mindestens zwei Epoxidgruppen pro Molekül enthaltenden Polyepoxid mit mindestens einer α,β-ethylenisch ungesättigten Carbonsäure, Polyurethan(meth-)acrylate sowie α,β-ethylenisch ungesättigte Acrylreste enthaltende Acrylcopolymere verwendet, wie sie in der EP-A-12 339 beschrieben sind. Gemische dieser Prepolymeren können ebenfalls verwendet werden. In Frage kommen ausserdem die in der EP-A-33 896 beschriebenen polymerisierbaren Prepolymere, bei denen es sich um Thioetheraddukte von polymerisierbaren Prepolymeren mit einem mittleren Molekulargewicht von mindestens 600, einem Carboxylgruppengehalt von 0,2 bis 15 % und einem Gehalt von 0,01 bis 0,8 Mol polymerisierbarer C-C-Doppelbindungen pro 100 g Prepolymer handelt. Andere geeignete wässrige Dispersionen auf Basis von speziellen
(Meth-)-Acrylsäurealkylester-Polymerisaten sind in der EP-A-41 125 beschrieben, geeignete in Wasser dispergierbare, strahlungshärtbare Prepolymere aus Urethanacrylaten sind der DE-A-29 36 039 zu entnehmen.
Als weitere Zusätze können diese strahlungshärtbaren wässrigen Prepolymerdispersionen Dispergierhilfsmittel, Emulgatoren, Antioxidantien, Lichtstabilisatoren, Farbstoffe, Pigmente, Füllstoffe, z.B. Talkum, Gips, Kieselsäure, Rutil, Russ, Zinkoxid, Eisenoxide, Reaktionsbeschleuniger, Verlaufsmittel, Gleitmittel, Netzmittel, Verdickungsmittel, Mattierungsmittel, Entschäumer und andere in der Lacktechnologie übliche Hilfsstoffe enthalten. Als Dispergierhilfsmittel kommen wasserlösliche hochmolekulare organische Verbindungen mit polaren Gruppen, wie z.B. Polyvinylalkohole, Polyvinylpyrrolidon oder Celluloseether in Frage. Als Emulgatoren können nicht-ionische, gegebenenfalls auch ionische Emulgatoren verwendet werden.

Bei der Verwendung von ethylenisch ungesättigten polymerisierbaren Verbindungen in wässrigen Systemen oder Emulsionen wird der Wasseranteil vor der Härtung zweckmässig weitgehend entfernt, z.B. durch Verdunsten.

Die photopolymerisierbaren Zusammensetzungen enthalten den Photoinitiator zweckmässig in einer Menge von 0,05 bis 15 Gew.-%, vorzugsweise 0,2 bis 5 Gew.-%, bezogen auf die Zusammensetzung.

Bevorzugt ist deshalb ein Verfahren, worin der Photoinitiator in einer Menge von 0,05 bis 15 Gew.-%, insbesondere 0,2 bis 5 Gew.-% eingesetzt wird.

In bestimmten Fällen kann es von Vorteil sein, Gemische von zwei oder mehr der erfindungsgemässen Photoinitiatoren zu verwenden.

Erfindungsgemäss ist deshalb auch ein Verfahren, worin neben dem Photoinitiator der Formel I noch andere Additive verwendet werden.

Gegenstand der Erfindung sind auch Zusammensetzungen enthaltend
(A) mindestens eine ethylenisch ungesättigte polymerisierbare Verbindung und
(B) als Photoinitiator ausschließlich Verbindungen der Formel I, dadurch gekennzeichnet, dass die Zusammensetzung durch Bestrahlen mit Tageslicht bzw. tageslichtäquivalenten Lichtquellen härtbar ist, wobei die Strahlungsintensitäten im Bereich von 10 - 30 mW/cm² liegen und die Wellenlänge der Strahlung 300 - 500 nm beträgt.

Die tageslichthärtbaren photopolymerisierbaren Zusammensetzungen können für verschiedene Zwecke verwendet werden, beispielsweise als Klarlack, als Weisslack, z.B. für Holz oder Metall, als Anstrichstoff, u.a. für Papier, Holz, Metall oder Kunststoff oder als Anstrich für Bauten- und Straßenmarkierung.

Die tageslichthärtbaren Zusammensetzungen eignen sich z.B. als Beschichtungsstoffe der Oberflächen von Substraten aller Art, z.B. Holz, Textilien, Papier, Keramik, Glas, Kunststoffe wie Polyester, Polyethylenterephthalat, Polyolefine oder Celluloseacetat.
Weitere Einsatzgebiete sind die Metallbeschichtung, beispielsweise bei der Lackierung von Metallkonstruktionen wie z.B. Brücken oder von Holzkonstruktionen im Sinne einer Leichtbauweise und die Herstellung von Verbundmassen.

Das erfindungsgemässe Verfahren zur Härtung mit Tageslicht bzw. tageslichtäquivalenten Lichtquellen ist auch in besonderer Weise zur Härtung von Formteilen aus Verbundmassen geeignet. Die Verbundmasse besteht aus einem selbsttragenden Matrixmaterial, z.B. einem Glasfasergewebe, das mit der lichthärtenden Formulierung durchtränkt wird. Wenn diese Masse dem Tageslicht ausgesetzt wird, tritt zunächst eine Anhärtung ein. In diesem Zustand ist das Material nicht mehr fliessfähig, weitgehend klebfrei und plastisch verformbar. Zur vollständigen Aushärtung wird das Formteil wieder dem Tageslicht ausgesetzt. Auf diese Weise hergestellte Formteile aus Verbundrnassen erreichen eine hohe mechanische Stabilität und Widerstandsfähigkeit.

Erfindungsgemäss ist auch ein Verfahren zum Beschichten von Oberflächen durch Aufbringen einer wie oben beschriebenen Zusammensetzung auf diese Oberflächen und Härtung der Schicht durch Bestrahlen mit Tageslicht bzw. tageslichtäquivalenten Lichtquellen, wobei die Strahlungsintensitäten im Bereich von 10 - 30 mW/cm² liegen und Wellenlänge der Strahlung 300 - 500 nm beträgt.

Die Beschichtung der Oberflächen kann erfolgen, indem eine flüssige Zusammensetzung oder Suspension auf das Substrat aufgebracht wird. Die Wahl des Solvens und die Konzentration richten sich hauptsächlich nach der Art der Zusammensetzung und nach dem Beschichtungsverfahren.
Die Suspension wird mittels bekannter Beschichtungsverfahren gleichförmig auf ein Substrat aufgebracht, z.B. durch Rakelbeschichtung, Aufpinseln oder Sprühen.
Die Auftragsmenge (Schichtdicke) der erfindungsgemässen Zusammensetzungen auf die Oberfläche der jeweiligen Substrate sind abhängig vom gewünschten Applikationsgebiet.
Der Schichtdickenbereich umfasst im allgemeinen Werte von ca 50 µm bis 7 mm, z.B. 250 µm bis 5 mm, insbesondere 500 µm bis 2 mm.

Die Härtung der Zusammensetzungen erfolgt durch Einwirkung von Tageslicht bzw. tageslichtäquivalenten Lichtquellen. Unter Tageslicht bzw. tageslichtäquivalenten Lichtquellen ist Strahlung der Wellenlänge 300-500 nrn zu verstehen.
Zur Härtung muss dabei insbesondere Strahlung der Wellenlänge 350-450 nm vorhanden sein. Im Gegensatz zur üblichen UV-Härtung mit Strahlung hoher Intensität wird im erfindungsgemässen Verfahren die Härtung durch Einwirkung von Strahlung geringerer Intensität über einen längeren Zeitraum erreicht Solche Strahlung ist beispielsweise Tageslicht (Sonnenlicht), sowie dem Tageslicht äquivalente Strahlungsquellen.
Sonnenlicht unterscheidet sich von dem Licht der üblicherweise in der UV-Härtung gebräuchlichen künstlichen Strahlungsquellen hinsichtlich seiner spektralen Zusammensetzung und der Intensität. Die Absorptionscharakteristika und die Radikalbildungseigenschaften der im erfindungsgemässen Verfahren eingesetzten Bisacylphosphinoxide sind in besonderer Weise geeignet, das Sonnenlicht als natürliche Strahlungsquelle für die Härtung auszunutzen.
Die bisher in UV-Härtungsverfahren eingesetzen Photoinitiatoren, wie z.B.
Benzildimethylketal, α-Hydroxy- oder α-Aminoketone, sind nicht in der Lage, die Oberfläche einer Schicht mit Tageslicht in zufriedenstellender Weise klebefrei zu härten.
Die im erfindungsgemässen Verfahren eingesetzten ausgewählten Bisacylphosphinoxide ergeben innerhalb von 1-120, z.B. 1-60, 1-30, insbesondere 1-15 Minuten klebfreie Oberflächen bei der Bestrahlung mit Tageslicht bzw. tageslichtäquivalenten Lichtquellen.
Die Strahlungsintensitäten der für die Härtung nutzbaren Strahlung liegen im Bereich von 10-30, vorzugsweise 10-20 mW/cm². Die Intensitäten der künstlichen Strahler, die üblicherweise in der UV-Härtung eingesetzt werden, sind dagegen im UV-Bereich grösser als 50 mW/cm².

Unter tageslichtäquivalenten künstlichen Lichtquellen, wie sie im erfindungsgemässen Verfahren verwendet werden können, sind Strahler geringer Intensität wie etwa bestimmte Leuchtstofflampen, z.B. die TL05 Philips Spezial-Leuchtstofflampe oder die TL09 Philips Spezial-Leuchtstofflampe, zu verstehen.

Die zu härtende Beschichtung kann dem Sonnenlicht oder tageslichtäquivalenten Lichtquellen direkt ausgesetzt werden. Die Härtung kann jedoch auch hinter einer transparenten Schicht (z.B. Glasscheibe oder Kunststofffolie) stattfinden.

Bei der Verwendung von Strahlungsquellen, welche Licht geringer Intensität erzeugen, werden aufwendige Härtungsapparaturen überflüssig, und die Zusammensetzungen können insbesondere für spezielle Aussenanwendungen eingesetzt werden. Die Härtung mit Tageslicht bzw. tageslichtäquivalenten Lichtquellen ist eine Alternative zum üblichen Fliessbandverfahren der Härtung mit UV-Licht. Im Gegensatz zum Fliessbandverfahren, welches insbesondere für flache Teile geeignet ist, kann die Tageslichthärtung für Aussenanwendungen an statischen und ortsfesten Gegenständen oder Konstruktionen eingesetzt werden. Dies sind z.B. Beschichtungen an Gebäuden, Fassaden, Brücken, Schiffen oder Markierungen auf Strassen und Plätzen, wie sie beispielsweise in der EP-A-160 723 beschrieben sind.

Die Härtung mit Tageslicht bzw. tageslichtäquivalenten Lichtquellen ist eine energiesparende Methode und bei Aussenanwendungen treten keine Emissionen von flüchtigen organischen Komponenten in die Umwelt auf.

Mit dem erfindungsgemässen Verfahren zur Härtung mit Tageslicht bzw. tageslichtäquivalenten Lichtquellen werden innerhalb von 1-120 Minuten, z.B. 1-60 Minuten, vorzugsweise 1-30 Minuten, insbesondere 1-15 Minuten, wischfeste Oberflächen erreicht.

Die Härtung mit Tageslicht bzw. tageslichtäquivalenten Lichtquellen ist jedoch auch zur serienmässigen Härtung geeignet, wobei die Gegenstände so gelagert werden, dass auch verwinkelte Stellen dem Tageslicht ausgesetzt werden. In diesem Zusammenhang können Spiegel oder Reflektoren zum Einsatz gelangen.

Zur Härtung mit Tageslicht bzw. tageslichtäquivalenten Lichtquellen, dessen Intensität/Flächeneinheit geringer ist als die von UV-Lampen, in einer akzeptablen Zeitspanne ist die Verwendung von wirksamen Photoinitiatoren notwendig. Diese Initiatoren müssen auch in der Lage sein, in den unteren Schichten der Zusammensetzungen, wo die Lichteinwirkung äusserst gering ist, eine ausreichende Menge initiierender Radikale zu bilden. Die in den beschriebenen Zusammensetzungen verwendeten speziellen Bisacylphosphinoxid-Initiatoren sind dazu überraschenderweise in besonderem Masse geeignet.

Die nachfolgenden Beispiele erläutern die Erfindung weiter. Angaben in Teilen oder Prozenten beziehen sich, ebenso wie in der übrigen Beschreibung und in den Patentansprüchen, auf das Gewicht, sofern nichts anderes angegeben ist.

### Referenzbeispiel 1: Herstellung von Bis(2,4,6-trimethylbenzoyl)(2-methyl-prop-1-yl)phosphinoxid

Zu einer Lösung aus 31,9 ml (0,225 mol) Diisopropylamin in 80 ml Tetrahydrofuran werden unter Stickstoff bei 0 °C 140,6 ml (0,225 mol; 1,6 M) Butyllithium innerhalb von 30 min getropft. Diese Lösung wird bei -30 °C innerhalb von 90 min zu einer Lösung aus 41,1 g (0,225 mol) 2,4,6-Trimethylbenzoylchlorid und 12 ml (0,102 mol) (2-Methyl-prop-1-yl)phosphin in 200 ml Tetrahydrofuran getropft. Nach 2 h Rühren bei -30 °C lässt man die gelbe Lösung auf Raumtemperatur erwärmen und wäscht einmal mit Wasser. Die organische Phase wird mit Magnesiumsulfat getrocknet, filtriert und am Rotationsverdampfer eingeengt. Der Rückstand wird in 200 ml Toluol gelöst und mit 11,6 g (0,102 mol) 30 %igem Wasserstoffperoxid versetzt. Nach 2 h Rühren wird zuerst mit Wasser, dann mit gesättigter Natriumhydrogencarbonatlösung nachgewaschen. Danach wird mit Magnesiumsulfat getrocknet, abfiltriert und die Lösung am Rotationsverdampfer eingeengt. Nach Kristallisation aus Hexan erhält man 27,8 g (68,5 % der Theorie) der oben genannten Verbindung als gelbes Pulver. Der Schmelzpunkt liegt bei 85-86 °C.

| Elementaranalyse: | | | |
|---|---|---|---|
| ber. % C | 72,34 | gef. % C | 72,13 |
| ber. % H | 7,84 | gef. % H | 7,94 |

### Beispiel 1:

Die Verbindung des Beispiels 1 wird analog zu der Verbindung des Referenzbeispiels 1 hergestellt. Die Verbindung und ihre analytischen Daten sind in der Tabelle 1 wiedergegeben.

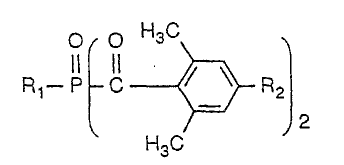

**Tabelle 1**

| Bsp. | R₁ | R₂ | Schmelzpunkt [°C] | Elementaranalyse [%] | ber. gef. |
|---|---|---|---|---|---|
| | | | | C | H |
| | | | | | |
| 1 | Phenyl | CH₃ | 128-129 | 74,63 | 6,50 |
| | | | | 74,53 | 6,65 |

### Beispiel 2: Härtung eines Klarlacks

Es wird eine Formulierung bereitet aus:

| | |
|---|---|
| 93,0 Teilen | Polyesteracrylat ®Ebecryl 830 (UCB, Belgien) |
| 4,5 Teilen | 1,6-Hexandioldiacrylat |
| 2,5 Teilen | Trimethylolpropantriacrylat |
| 4,0 Teilen | Bis(2,4,6-trimethylbenzoyl)-phenyl-phosphinoxid |

Mit einer 100 µm Spaltrakel wird eine Beschichtung auf Holz aufgetragen. Die Beschichtung wird der direkten Sonnenstrahlung ausgesetzt (Basel, August 1991). Die Wischfestigkeit der gehärteten Beschichtung wird durch Reiben mit einem Papiertuch über die Oberfläche geprüft.
Die Beschichtung ist nach 10 Minuten Bestrahlung mit Tageslicht wischfest und hat eine Pendelhärte von 115 s.

### Beispiel 3: Härtung eines Weisslacks

Es wird eine Formulierung bereitet aus

| | |
|---|---|
| 72,5 Teilen | ungesättigtem Polyester/Styrol ®Roskydal 502 (Bayer, Deutschland) |
| 25,0 Teilen | Rutil-Titandioxid R-Tc2 (Tioxide, Frankreich) |
| 0,5 Teilen | Verlaufshilfsmittel ®Byk 300 (Byk-Mallinckrodt) |
| 2,0 Teilen | Bis(2,4,6-trimethylbenzoyl)-phenyl-phosphinoxid |

Mit einer 150 µm Spaltrakel werden Schichten auf hellgrundierte Spanplatten aufgetragen und dem Sonnenlicht ausgesetzt. Nach 30 Minuten ist die Oberfläche klebefrei und die Pendelhärte beträgt 42 s. Nach einer Stunde Nachhärten beträgt die Pendelhärte 111 s.

### Beispiel 4: Härtung eines Klarlacks

Es wird eine Formulierung gemäss Beispiel 2 bereitet, wobei als Photoinitiator 4 Teile Bis(2,4,6-trimethylbenzoyl)-phenyl-phosphinoxid eingesetzt werden. Mit dieser Formulierung werden mit Hilfe einer 100 µm Spaltrakel Spanplatten beschichtet. Zur Härtung der Beschichtungen wird mit 5 Lampen des Typs TL 03 (Philips) im Abstand von 15 cm belichtet. Die Beschichtung ist nach 8 Minuten Belichtung klebefrei gehärtet.

### Beispiel 5: Härtung eines Weisslacks

Es werden Formulierungungen bereitet aus

| | |
|---|---|
| 72,5 | Teilen ungesättigtem Polyester/Styrol ® Roskydal 502 (Bayer, Deutschland) |
| 25,0 | Teilen Rutil-Titandioxid R-Tc2 (Tioxide, Frankreich) |
| 0,5 | Teilen Verlaufshilfsmittel ® Byk 300 (Byk-Mallinckrodt) |
| 2,0 | Teilen Photoinitiator |

Mit dieser Formulierung wird mit Hilfe einer 150 µm Spaltrakel eine Spanplatte beschichtet. Zur Härtung der Beschichtungen wird mit 5 Lampen des Typs TL 03 (Philips). Bestimmt wird die Zeit, nach der die Beschichtung klebefrei ist. Die verwendete Photoinitiatorverbindung, sowie die Ergebnisse sind in der Tabelle 3 zusammengestellt.

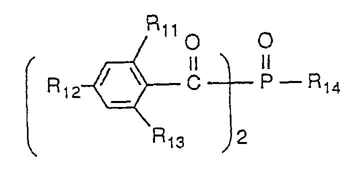

**Tabelle 3**

| Photoinitiator | | | | Klebfrei nach [min] |
|---|---|---|---|---|
| R₁₁ | R₁₂ | R₁₃ | R₁₄ | |
| CH₃ | CH₃ | CH₃ | phenyl | 3 |

## Patentansprüche

1. Verfahren zur Härtung von ethylenisch ungesättigten polymerisierbaren Verbindungen, **dadurch gekennzeichnet, dass** man diesen als Photoinitiatoren ausschließlich Verbindungen der Formel I 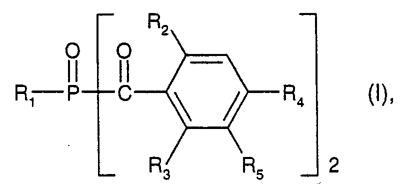 zusetzt, worin
**R**₁ Phenyl bedeutet;
**R**₂ und **R**₃ unabhängig voneinander für C₁-C₁₂-Alkyl stehen;
**R**_{**4**} Wasserstoff oder C₁-C₁₂-Alkyl darstellt; und
**R**₅ Wasserstoff oder Methyl bedeutet;
und mit Tageslicht bzw. tageslichtäquivalenten Lichtquellen bestrahlt, wobei die Strahlungsintensitäten im Bereich von 10 - 30 mW/cm² liegen und die Wellenlänge der Strahlung 300 - 500 nm beträgt.

2. Verfahren nach Anspruch 1, worin in den Verbindungen der Formel I **R**_{**2**} und **R**_{**3**} C₁-C₄-Alkyl bedeuten und **R**_{**4**} Wasserstoff oder C₁-C₄-Alkyl ist.

3. Verfahren nach Anspruch 2, worin in den Verbindungen der Formel I, **R**_{**2**}, **R**_{**3**} und **R**_{**4**} Methyl bedeuten und **R**_{**5**} Wasserstoff ist.

4. Verfahren nach Anspruch 1, worin die ethylenisch ungesättigten polymerisierbaren Verbindungen eine Mischung aus (i) mindestens einer oligomeren Verbindung und (ii) mindestens einem Monomer sind.

5. Verfahren nach Anspruch 4, worin die ethylenisch ungesättigten polymerisierbaren Verbindungen eine Mischung aus (i) ungesättigten Polyestern und (ii) Acrylaten, Methacrylaten oder/und Styrol sind.

6. Verfahren nach Anspruch 5, worin die ethylenisch ungesättigten polymerisierbaren Verbindungen eine Mischung aus (i) ungesättigten Polyestern und (ii) Acrylaten oder/und Methacrylaten sind.

7. Verfahren nach Anspruch 5, worin die ungesättigten Polyester (i) aus Maleinsäure, Fumarsäure und/oder Phthalsäure und einem oder mehreren Diolen hergestellt werden und Molekulargewichte von 500-3000 besitzen.

8. Verfahren nach Anspruch 4, worin die ethylenisch ungesättigten polymerisierbaren Verbindungen eine Mischung aus (i) Polyesteracrylaten und (ii) Acrylaten und/oder Methacrylaten sind.

9. Verfahren nach Anspruch 1, worin die ethylenisch ungesättigten polymerisierbaren Verbindungen in Wasser gelöst oder emulgiert sind.

10. Verfahren nach Anspruch 1, worin der Photoinitiator in einer Menge von 0,05 bis 15 Gew.-%, insbesondere 0,2 bis 5 Gew.-%, eingesetzt wird.

11. Verfahren nach Anspruch 1, worin neben dem Photoinitiator der Formel I noch andere Additive verwendet werden.

12. Verwendung von ausschließlich Verbindungen der Formel I als Photoinitiatoren zur Härtung von ethylenisch ungesättigten polymerisierbaren Verbindungen mit Tageslicht bzw. tageslichtäquivalenten Lichtquellen, wobei die Strahlungsintensitäten im Bereich von 10 - 30 mW/cm² liegen und die Wellenlänge der Strahlung 300 - 500 nm beträgt.

13. Zusammensetzungen enthaltend
(A) mindestens eine ethylenisch ungesättigte polymerisierbare Verbindung und
(B) als Photoinitiator ausschließlich Verbindungen der Formel I
**dadurch gekennzeichnet, dass** die Zusammensetzung durch Bestrahlen mit Tageslicht bzw. tageslichtäquivalenten Lichtquellen wobei die Strahlungsintensitäten im Bereich von 10 - 30 mW/cm² liegen und die Wellenlänge der Strahlung 300 - 500 nm beträgt, härtbar ist.

14. Verfahren zum Beschichten von Oberflächen durch Aufbringen einer Zusammensetzung nach Anspruch 13 auf diese Oberflächen und Härtung der Schicht durch Bestrahlen mit Tageslicht bzw. tageslichtäquivalenten Lichtquellen wobei die Strahlungsintensitäten im Bereich von 10 - 30 mW/cm² liegen und die Wellenlänge der Strahlung 300 - 500 nm beträgt.

## Claims

1. A process for curing ethylenically unsaturated polymerisable compounds, which comprises adding thereto as photoinitiators exclusively compounds of formula I 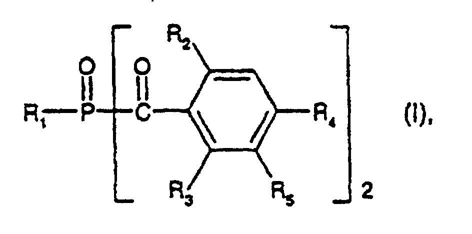 in which
R₁ is phenyl;
R₂ and R₃ are each independently of the other C₁-C₁₂alkyl;
R₄ is hydrogen or C₁-C₁₂alkyl; and
R₅ is hydrogen or methyl;
and irradiating the mixture with daylight and/or daylight-equivalent light sources at intensities in the range of 10-30 mW/cm² with wavelengths of 300-500 nm.

2. A process according to claim 2, wherein in the compounds of formula I R₂ and R₃ are C₁-C₄alkyl and R₄ is hydrogen or C₁-C₄alkyl.

3. A process according to claim 2, wherein in the compounds of formula I R₂, R₃ and R₄ are methyl and R₅ is hydrogen.

4. A process according to claim 1, wherein the ethylenically unsaturated polymerisable compounds are a mixture of (i) at least one oligomeric compound and (ii) at least one monomer.

5. A process according to claim 4, wherein the ethylenically unsaturated polymerisable compounds are a mixture of (i) unsaturated polyesters and (ii) acrylates, methacrylates and/or styrene.

6. A process according to claim 5, wherein the ethylenically unsaturated polymerisable compounds are a mixture of (i) unsaturated polyesters and (ii) acrylates and/or methacrylates.

7. A process according to claim 5, wherein the unsaturated polyesters (i) are prepared from maleic acid, fumaric acid and/or phthalic acid and one or more than one diol and have molecular weights of 500-3000.

8. A process according to claim 4, wherein the ethylenically unsaturated polymerisable compounds are a mixture of (i) polyester acrylates and (ii) acrylates and/or methacrylates.

9. A process according to claim 1, wherein the ethylenically unsaturated polymerisable compounds are in emulsion or solution in water.

10. A process according to claim 1, wherein the photoinitiator is used in an amount of 0.05 to 15% by weight, especially 0.2 to 5% by weight.

11. A process according to claim 1, wherein other additives are used in addition to the photoinitiator of formula I.

12. The use of exclusively compounds of formula I as photoinitiators for curing ethylenically unsaturated polymerisable compounds with daylight and/or daylight-equivalent light sources at intensities in the range of 10-30 mW/cm² with wavelengths of 300-500 nm.

13. A composition comprising
(A) at least one ethylenically unsaturated polymerisable compound and
(B) as photoinitiator exclusively compounds of formula, which composition is curable by irradiation with daylight and/or daylight-equivalent light sources at intensities in the range of 10-30 mW/cm² with wavelengths of 300-500 nm.

14. A process for coating surfaces by applying a composition according to claim 13 to these surfaces and curing the layer by irradiation with daylight and/or daylight-equivalent light sources at intensities in the range of 10-30 mW/cm² with wavelengths of 300-500 nm.

## Revendications

1. Procédé pour le durcissement de composés polymérisables éthyléniquement insaturés **caractérisé en ce qu'**on ajoute comme photoinitiateurs exclusivement des composés de formule I 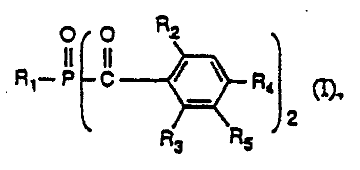 dans laquelle
R₁ représente un groupe phényle ;
R₂ et R₃ représentent indépendamment l'un de l'autre un groupe alkyle en C₁ à C₁₂ ;
R₄ représente un atome d'hydrogène ou un groupe alkyle en C₁ à C₁₂, et
R₅ représente un atome d'hydrogène ou un groupe méthyle ;
et on insole avec la lumière du jour ou avec des sources de lumière équivalentes à la lumière du jour, dans lequel les intensités de rayonnement se situent dans la gamme comprise entre 10 et 30 mW/cm² et la longueur d'onde du rayonnement s'élève à entre 300 et 500 nm.

2. Procédé selon la revendication 1, dans lequel dans les composés de formule I R₂ et R₃ représentent un groupe alkyle en C₁ à C₄ et R₄ est un atome d'hydrogène ou un groupe alkyle en C₁ à C₄.

3. Procédé selon la revendication 2, dans lequel dans les composés de formule I R₂, et R₃ et R₄ représentent un groupe méthyle et R₅ est un atome d'hydrogène.

4. Procédé selon la revendication 1, dans lequel les composés polymérisables éthyléniquement insaturés sont un mélange (i) d'au moins un composé oligomère et (ii) d'au moins un monomère.

5. Procédé selon la revendication 4, dans lequel les composés polymérisables éthyléniquement insaturés sont un mélange (i) de polyesters insaturés et (ii) d'acrylates, de méthacrylates et/ou de styrène.

6. Procédé selon la revendication 5, dans lequel dans les composés polymérisables éthyléniquement insaturés sont un mélange (i) de polyesters insaturés et (ii) d'acrylates et/ou de méthacrylates.

7. Procédé selon la revendication 5, dans lequel les polyesters insaturés sont préparés (i) à partir d'acide maléique, d'acide fumarique et/ou d'acide phtalique et d'un ou de plusieurs diols et possèdent des masses moléculaires de 500 à 3000.

8. Procédé selon la revendication 4, dans lequel les composés polymérisables éthyléniquement insaturés sont un mélange (i) de polyester acrylates et (ii) d'acrylates et/ou de méthacrylates.

9. Procédé selon la revendication 1, dans lequel les composés polymérisables éthyléniquement insaturés sont dissous ou émulsionnés dans l'eau.

10. Procédé selon la revendication 1, dans lequel le photoinitiateur est mis en oeuvre en une quantité de 0,05 à 15 % en poids, en particulier de 0,2 à 5 % en poids.

11. Procédé selon la revendication 1, dans lequel on utilise en plus du photoinitiateur de formule I encore d'autres additifs.

12. Utilisation de composés exclusifs de formule I comme photoinitiateurs pour le durcissement de composés photopolymérisables éthyléniquement insaturés avec la lumière du jour ou des sources de lumières équivalentes à la lumière du jour, dans lequel les intensités d'insolation se situent dans le domaine de 10 à 30 mW/cm² et la longueur d'onde du rayonnement s'élève à entre 300 et 500 nm.

13. Compositions contenant
(A) au moins un composé polymérisable éthyléniquement insaturé et
(B) comme photoinitiateurs exclusivement des composés de formule I, **caractérisés en ce que** la composition est durcissable par insolation avec la lumière du jour ou des sources de lumière équivalentes à la lumière du jour, dans lesquels les intensités d'insolation se situent dans la gamme comprise entre 10 et 30 mW/cm² et la longueur d'onde du rayonnement s'élève à entre 300 et 500 nm.

14. Procédé d'enduction de surfaces par dépôt d'une composition selon la revendication 13 sur ces surfaces et durcissement de la couche par insolation avec la lumière du jour ou des sources de lumière équivalentes à la lumière du jour, dans lequel les intensités d'insolation se situent dans la gamme comprise entre 10 et 30 mW/cm² et la longueur d'onde du rayonnement s'élève à entre 300 et 500 nm.
